# EUROPEAN PATENT APPLICATION

(11) **EP 4 745 874 A1**
(43) Date of publication of application: **20.05.2026**
(21) Application number: 24849432.0
(22) Date of filing: 18.07.2024
(51) Int. Cl.: G06T 5/50, G06T 7/269, G06T 7/11, G06T 7/38, H04N 5/14, G06T 5/73

(54) **METHOD FOR OBTAINING IMAGE AND ELECTRONIC DEVICE THEREFOR**

(30) Priority: 02.08.2023 KR 20230101098; 14.09.2023 KR 20230122557
(71) Applicant: Samsung Electronics Co., Ltd., Suwon-si, Gyeonggi-do 16677 (KR)
(72) Inventor: KANG, Inseok, Suwon-si Gyeonggi-do 16677 (KR); LIM, Sanghyeon, Suwon-si Gyeonggi-do 16677 (KR); KIM, Jihyun, Suwon-si Gyeonggi-do 16677 (KR); PARK, Jiyoon, Suwon-si Gyeonggi-do 16677 (KR)
(74) Representative: Gulde & Partner
(86) International application number: PCT/KR2024/010326
(87) International publication number: WO 2025/028863

(57) **Abstract**

An electronic device according to an embodiment disclosed in the present document may comprise: one or more cameras; a display; at least one processor; and a memory for storing instructions. The instructions, when executed by the at least one processor, may cause the electronic device to: obtain a plurality of images including one or more objects by using the one or more cameras in response to a photographing request of a user; determine a first reference image among the plurality of images on the basis of at least one of sharpness and brightness detected from each image or a capture time of each image; identify at least one object in which the eyes are closed, from the first reference image; obtain a second reference image by combining a pre-stored eye area image with an eye area of the at least one object in the first reference image; calculate a movement difference between the second reference image and the remaining images excluding an eye area in which the eyes are closed from the plurality of images; and display, on the display, an image obtained by combining the plurality of images on the basis of the calculated movement difference. Other various embodiments identified by the present document are possible.

## Description

### [Technical Field]

The disclosure relates to a method for obtaining an image and an electronic device therefor.

### [Background Art]

As it has become common to carry portable electronic devices in daily life, the use of camera functions of portable electronic devices has significantly increased, and photography using portable electronic devices has become such an indispensable feature that a camera function is a criterion for choosing a portable electronic device. Recently, as camera functions implemented in portable electronic devices have been advanced, technologies for removing noise while minimizing the degradation of image quality to obtain a high-resolution image have been applied. For example, an electronic device is able to obtain an image with reduced noise and enhanced sharpness and detail by using a multi-frame processing technique of synthesizing a plurality of images into a single image when capturing an image.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problem]

An electronic device according to an embodiment of the disclosure may include one or more cameras, a display, at least one processor, and a memory storing instructions. The instructions may, when executed by the at least one processor, cause the electronic device to obtain a plurality of images including one or more objects by using the one or more cameras, in response to a shooting request from a user. The instructions may, when executed by the at least one processor, cause the electronic device to determine a first reference image among the plurality of images, based on at least one of sharpness or brightness detected from each of the images, or capture time of each of the images. The instructions may, when executed by the at least one processor, cause the electronic device to identify at least one object in a closed-eye state from the first reference image. The instructions may, when executed by the at least one processor, cause the electronic device to obtain a second reference image by combining a prestored eye area image with an eye area of the at least one object in the first reference image. The instructions may, when executed by the at least one processor, cause the electronic device to calculate a movement difference between the second reference image and remaining images excluding an eye area in the closed-eye state from the plurality of images. The instructions may, when executed by the at least one processor, cause the electronic device to display, on the display, an image obtained by synthesizing the plurality of images, based on the calculated movement difference.

A method according to an embodiment of the disclosure may include obtaining a plurality of images including one or more objects by using one or more cameras. The method may include determining a first reference image among the plurality of images, based on at least one of sharpness or brightness detected from each of the images, or capture time of each of the images. The method may include identifying at least one object in a closed-eye state from the first reference image. The method may include obtaining a second reference image by synthesizing a prestored eye area image with an eye area of the at least one object in the first reference image. The method may include calculating a movement difference between the second reference image and remaining images excluding an eye area in the closed-eye state from the plurality of images. The method may include displaying an image obtained by synthesizing the plurality of images, based on the calculated movement difference.

### [Brief Description of Drawings]

FIG. 1 is a block diagram of an electronic device in a network environment according to an embodiment.
FIG. 2 is a block diagram illustrating a camera module according to various embodiments.
FIG. 3 is a diagram illustrating a method for obtaining a captured image of an object according to a comparative example.
FIG. 4 is a diagram illustrating a configuration of an electronic device according to an embodiment.
FIG. 5 is a flowchart illustrating a method in which an electronic device determines a reference image according to an embodiment.
FIG. 6 is a flowchart illustrating a method in which an electronic device determines a reference image among images having different brightness levels according to an embodiment.
FIG. 7A and FIG. 7B are diagrams illustrating a method in which an electronic device obtains an image by changing an eye area of a reference image according to an embodiment.
FIG. 8 is a diagram illustrating a method in which an electronic device changes an eye area of a reference image by using eye area images of images having different brightness levels according to an embodiment.
FIG. 9 is a flowchart illustrating an operating method in which an electronic device obtains an image by changing an eye area of a reference image according to an embodiment.
FIG. 10A and FIG. 10B are diagrams illustrating a method in which an electronic device obtains an image by changing a reference image according to an embodiment.
FIG. 11 is a diagram illustrating a method in which an electronic device changes a reference image by using images having different brightness levels according to an embodiment.
FIG. 12 is a flowchart illustrating an operating method in which an electronic device obtains an image by changing a reference image according to an embodiment.
FIG. 13 is a flowchart illustrating an operating method of an electronic device according to an embodiment.

With regard to the description of the drawings, the same or like reference numerals may be used to designate the same or like elements.

### [Mode for the Invention]

Hereinafter, various embodiments disclosed herein will be described with reference to the accompanying drawings. However, it should be understood that there is no intent to limit various embodiments of the disclosure to particular forms disclosed herein; rather, the disclosure should be construed to cover various modifications, equivalents, and/or alternatives of embodiments of the disclosure.

To reduce blur caused by a motion of a subject or a camera during image capture, a multi-frame processing technique that synthesize a plurality of images into a single image may be applied. When multi-frame processing is applied, an electronic device may obtain a captured result by calculating a difference between a reference frame and other frames among a plurality of images obtained during a shooting time and synthesizing the frames while removing the difference. When the subject is a person, the state of the subject's eyes (e.g., an open-eye state or a closed-eye state) is not considered during a process of synthesizing the plurality of images. Therefore, the electronic device may obtain different images depending on the state of the subject's eyes in the reference frame. The electronic device may repeatedly capture images including the subject or synthesize a plurality of images consecutively captured in order to obtain an image in which the subject's eyes are not closed. However, in this case, the electronic device may need to photograph a plurality of times to obtain an image matching a user's intention. Accordingly, it may be difficult to immediately obtain a captured image at a user-desired timing, causing inconvenience.

In various embodiments of the disclosure, when a captured image is obtained by synthesizing a plurality of images, an eye area of an object in a reference image may be analyzed to change the eye area of the object in a closed-eye state, or an image in which the object is in an open-eye state may be selected as the reference image, thereby obtaining an image of a user-desired quality with single shooting.

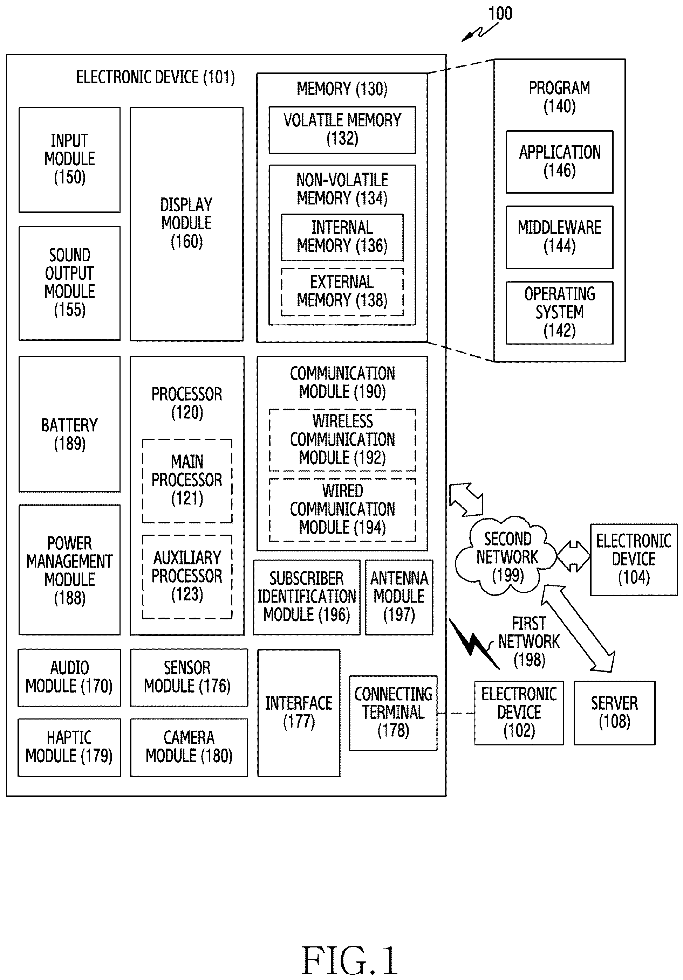

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

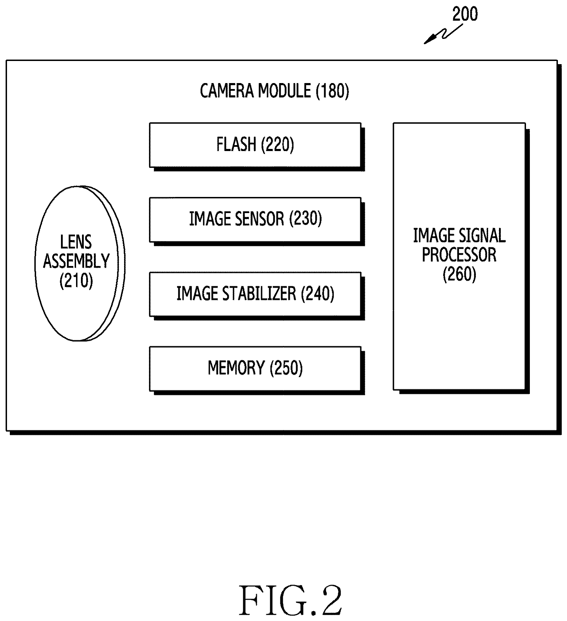

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

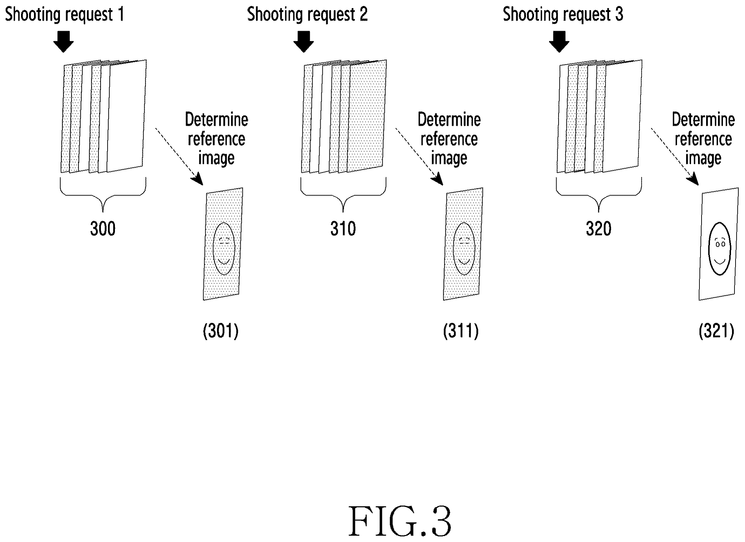

FIG. 3 is a diagram illustrating a method for obtaining a captured image of an object according to a comparative example. In the comparison example, an electronic device (e.g., the electronic device 101 of FIG. 1) may capture an image including one or more objects. The one or more objects may correspond to a person.

Referring to FIG. 3, the electronic device 101 may obtain a plurality of images including one or more objects in response to a shooting request input by a user. The electronic device 101 may determine an image with minimum motion blur among the plurality of images as a reference image, and may obtain a captured image by performing image synthesis considering a movement difference between the determined reference image and remaining images other than the reference image among the plurality of images. Here, an eye state of the one or more objects included in the captured image may be determined based on the reference image. When an object in the determined reference image is in a closed-eye state, a captured image including the object in the closed-eye state may be obtained. Accordingly, the user may need to repeatedly perform shooting until an image including the object in an open-eye state is obtained.

In the comparative example, the electronic device 101 may obtain a plurality of consecutive image frames 300 when shooting request 1 is input by the user. The electronic device 101 may determine a reference image 301 that is a base for image synthesis among the plurality of image frames 300, based on a motion blur detected from each image. For example, the electronic device 101 may determine degree of motion blur, based on sharpness of an edge detected from each of the plurality of image frames 300. When an object included in the reference image 301 is in a closed-eye state, the electronic device 101 may obtain an image including the object in the closed-eye state as a captured image according to shooting request 1.

In the comparative example, the user may perform reshooting to obtain an image with the object's eyes not closed. When shooting request 2 is input by the user, the electronic device 101 may additionally obtain a plurality of consecutive image frames 310. The electronic device 101 may determine an image with minimum motion blur among the plurality of image frames 310 as a reference image 311. In this case, when the object in the reference image 311 is in the closed-eye state, the electronic device 101 may also obtain a captured image including the object in the closed-eye state in response to shooting request 2.

In the comparative example, the user may repeatedly perform shooting until an image with the object's eyes not closed is obtained. When shooting request 3 is input by the user, the electronic device 101 may additionally obtain a plurality of consecutive image frames 320. The electronic device 101 may determine an image with minimum motion blur among the plurality of image frames 320 as a reference image 321. When the object in the reference image 321 is in an open-eye state, the electronic device 101 may obtain an image including the object in the open-eye state in response to shooting request 3. In the comparative example, the user may need to repeatedly perform shooting a plurality of times in order to obtain a captured image in which an object (subject) is in the open-eye state according to the user's intention, and time required for repeated shootings may cause difficulty in obtaining a captured image at a user-desired timing.

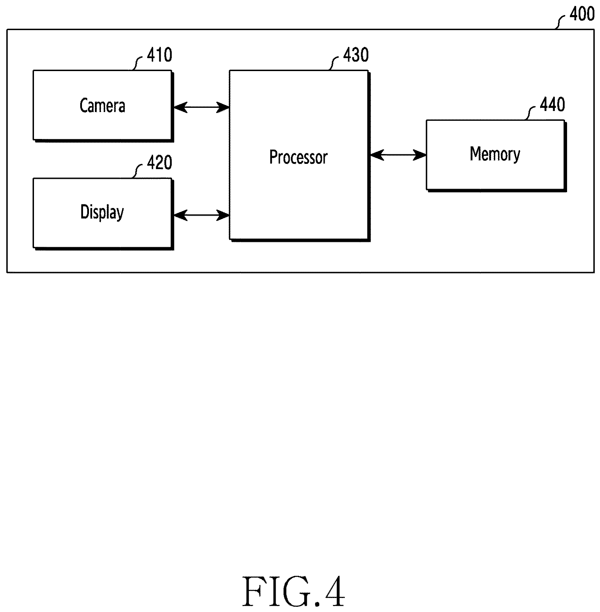

FIG. 4 is a diagram illustrating a configuration of an electronic device 400 according to an embodiment.

Referring to FIG. 4, the electronic device 400 may be a device that performs image processing for obtaining an image matching a user's intention at a user-desired timing by a single shoot, and may include one or more cameras 410, a display 420, at least one processor 430, or a memory 440. The electronic device 400 of FIG. 4 may correspond to the electronic device 101 illustrated in FIG. 1.

In an embodiment, the one or more cameras 410 (e.g., the camera module 180 of FIG. 1) may photograph a subject according to an operation of the user. For example, when a shooting request (e.g., a shutter button) is input from the user, the one or more cameras 410 may synthesize a plurality of images based on a time point at which the shooting request is input to obtain a captured image.

In an embodiment, the display 420 (e.g., the display module 160 of FIG. 1) may display an image captured using the one or more cameras 410.

In an embodiment, the display 420 may include at least one of a liquid crystal display (LCD), a thin-film transistor (TFT) LCD, an organic light-emitting diodes (OLED), a light-emitting diode (LED), an active-matrix organic light-emitting diode (AMOLED), a flexible display, and a 3-dimensional (3D) display. Some of the displays may be configured as transparent or light-transmitting types to allow the outside to be seen therethrough. These displays may be configured in a form of a transparent display including a transparent OLED (TOLED).

In an embodiment, the memory 440 (e.g., the memory 130 of FIG. 1) may store instructions to, when executed, control the at least one processor 430 (e.g., the processor 120 of FIG. 1) to perform various operations. For example, the at least one processor 430 may perform operations for obtaining an image including an object with eyes not closed when obtaining/providing a captured image by synthesizing a plurality of images in response to a shooting request (e.g., a shutter button) input by the user.

In an embodiment, the at least one processor 430 may obtain a plurality of images including one or more objects by using the one or more cameras 410 in response to a shooting request of the user. The plurality of images may be a plurality of image frames consecutively captured based on a time point when the shooting request is input. According to various embodiments, the at least one processor 430 may detect an eye area of the one or more objects in each of the plurality of images, and may analyze a state of the detected eye area. The at least one processor 430 may distinguish the plurality of images according to the analyzed eye state of the one or more objects. The at least one processor 430 may identify an image in which the one or more objects are in an open-eye state among the plurality of images, based on the analysis, and may extract an eye area image from the image in which the one or more objects are in the open-eye state to store the image in the memory 440. When the number of the one or more objects is two or more, the at least one processor 430 may identify an image in which each of the one or more objects is in the open-eye state, and may extract an eye area image from the image in which each object is in the open-eye state to store the image in the memory 440. Here, the eye area image may be an image corresponding to a specified range including both eyes and eyelids on a face of each object. According to various embodiments, the at least one processor 430 may perform image registration for each of the plurality of obtained images, based on a single coordinate system, in accordance with a captured order.

In an embodiment, the at least one processor 430 may determine a first reference image that serves as a base when generating a captured image among the plurality of images. The at least one processor 430 may select the first reference image, based on at least one of sharpness or brightness detected from each image, or capture time of each image. For example, the at least one processor 430 may identify at least one image having a specified brightness value among the plurality of images, and may determine an image having highest sharpness among the at least one image as the first reference image. When there is no image having the specified brightness value, the at least one processor 430 may determine an image having highest sharpness among the plurality of images as the first reference image. In this process, the at least one processor 430 may calculate an edge score for each of the plurality of images, and may determine sharpness of each image, based on the calculated edge score. The edge score may be a result of quantifying the number of edges extracted from each of the plurality of images and/or sharpness of the extracted edges. When identifying that there are two or more images having the highest sharpness among the plurality of images or the at least one image, the at least one processor 430 may determine an image having a capture time closest to the time when the shooting request is input as the first reference image.

In another example, the at least one processor 430 may determine one or more candidate images having a sharpness of a threshold level or higher among the plurality of images. The sharpness may be determined based on an edge score calculated for each of the plurality of images. The at least one processor 430 may identify the eye state of the one or more objects included in the one or more candidate images, and may select, as the first reference image, an image in which the one or more objects are in the open-eye state among the one or more candidate images. When the number of the one or more objects is two or more, the at least one processor 430 may determine an image in which a largest number of objects are in the open-eye state as the first reference image. When identifying that there are two or more images in which a largest number of objects are in the open-eye state among the one or more candidate images, the at least one processor 430 may determine an image having a capture time closest to the time when the shooting request is input as the first reference image.

According to various embodiments, when the brightness of the plurality of images is different from each other, the at least one processor 430 may determine an image having a specified brightness value among the plurality of images as the first reference image, and may change the first reference image considering the sharpness of the image. The at least one processor 430 may identify an image not having the specified brightness value among the plurality of images, and may identify a first image having highest sharpness among the images not having the specified brightness value. The sharpness may be determined based on an edge score calculated for the plurality of images. The at least one processor 430 may determine whether the first image has a sharpness exceeding a specified value compared to the first reference image. For example, the at least one processor 430 may calculate a movement difference between the first reference image and the first image, and may replace the first reference image with the first image when the calculated movement difference is greater than a threshold value.

In an embodiment, the at least one processor 430 may identify at least one object in the closed-eye state in the first reference image. According to various embodiments, when identifying the at least one object in the closed-eye state in the first reference image, the at least one processor 430 may determine that the first reference image needs to be changed. In this case, the at least one processor 430 may select one or more candidate images having a sharpness of the threshold level or higher, based on the edge score calculated for each of the plurality of images, and may replace the first reference image with an image in which the one or more objects are in the open-eye state among the one or more candidate images. When the number of the one or more objects is two or more, the at least one processor 430 may replace the first reference image with an image in which a largest number of objects are in the open-eye state. According to various embodiments, the at least one processor 430 may determine whether the first reference image and the image in which the one or more objects are in the open-eye state have the same brightness. When determining that the brightness of the first reference image is different from that of the image in which the one or more objects are in the open-eye state, the at least one processor 430 may match the brightness of the image in which the one or more objects are in the open-eye state to the brightness of the first reference image, and may replace the first reference image with the brightness-matched image.

In an embodiment, when the at least one processor 430 identifies an object in the closed-eye state among the one or more objects included in the first reference image, the at least one processor 430 may determine to change an eye area of the identified object. The at least one processor 430 may synthesize the eye area of the at least one object identified from the first reference image and a previously stored eye area image to change the eye area of the at least one object within the first reference image. The eye area image may be an image stored by extracting the eye area of the at least one object from the image in which the at least one object is in the open-eye state among the plurality of images. When the at least one object is identified in the first reference image, the at least one processor 430 may load the previously stored eye area image from the memory 440, and may synthesize the previously stored eye area image with the eye area of the at least one object in the first reference image, thereby generating a second reference image. According to various embodiments, when the at least one processor 430 identifies one or more objects from the plurality of images obtained in response to the shooting request from the user, the at least one processor 430 may extract an image in which each object in the open-eye state by analyzing the eye area of the one or more objects detected from each of the plurality of images. For example, the at least one processor 430 may identify an image in which both eyes of each object are open among the plurality of images, and may extract and store a specified range including both eyes and eyelids of each object as an eye area image. In another example, when there is an object for which it is difficult to identify that both eyes are open, the at least one processor 430 may separately extract and store an eye area image of a left eye open and an eye area image of a right eye open from the plurality of images for the corresponding object. According to various embodiments, when the at least one processor 430 identifies an object in the closed-eye state in the first reference image, the at least one processor 430 may change an eye area of the identified object. For example, the at least one processor 430 may load an eye area image of the identified object from the memory 440, and may detect a range corresponding to the eye area image of the identified object in the first reference image. The at least one processor 430 may generate the second reference image by synthesizing the eye area image of the identified object to be superimposed on the range detected in the first reference image. In this case, when the detected range and a size of the eye area image of the identified object are different from each other, the at least one processor 430 may perform synthesis after adjusting the size of the eye area image of the identified object to correspond to the detected range. In another example, when identifying the eye area image of the identified object from the memory 440, the at least one processor 430 may detect a range corresponding to the eye area image of the identified object from the first reference image, crop the detected range, and synthesize the eye area image of the identified object in be inserted into the cropped range, thereby generating the second reference image.

According to various embodiments, the at least one processor 430 may determine whether the first reference image and the previously stored eye area image have the same brightness. When determining that the brightness of the first reference image and the brightness of the previously stored eye area image are the same, the at least one processor 430 may synthesize the eye area of the at least one object in the first reference image and the eye area image without brightness matching between the two images, thereby obtaining the second reference image. When determining that the brightness of the first reference image and the brightness of the previously stored eye area image are different, the at least one processor 430 may match the brightness of the eye area image to the brightness of the first reference image, and then synthesize the matched eye area image and the eye area of the at least one object in the first reference image, thereby obtaining the second reference image. According to various embodiments, the at least one processor 430 may also process an area of the first reference image where a blur has occurred due to a movement of the one or more objects by synthesizing a clear partial image extracted to other images

In an embodiment, the at least one processor 430 may calculate a movement difference between the second reference image and remaining images other than the first reference image among the plurality of images. Here, the at least one processor 430 may identify an eye area of an object in the closed-eye state in the remaining images, and may calculate a movement difference between the second reference image and the remaining images excluding the identified eye area. The at least one processor 430 may generate a motion map, based on the calculated movement difference, and may synthesize the plurality of images, based on the generated motion map.

In an embodiment, the at least one processor 430 may obtain an image by synthesizing the plurality of images, based on the calculated movement difference, and may display the obtained image on the display 420 as a captured result in response to the shooting request. According to various embodiments, the at least one processor 430 may combine the plurality of images into a single file to provide the same in a form of a moving image.

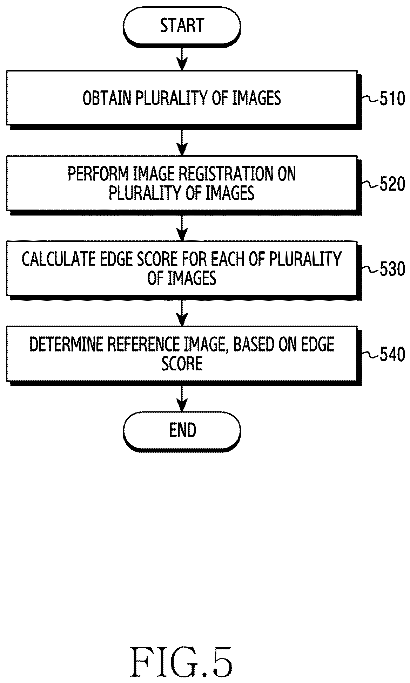

FIG. 5 is a flowchart illustrating a method in which an electronic device 400 determines a reference image according to an embodiment. Operations illustrated in FIG. 5 may be construed as being performed by at least one processor (e.g., the processor 120 of FIG. 1 or the at least one processor 430 of FIG. 4) included in the electronic device 400.

Referring to FIG. 5, in operation 510, the electronic device 400 may obtain a plurality of images by using one or more cameras (e.g., the camera module 180 of FIG. 1 or the one or more cameras 410 of FIG. 4). When identifying that a shooting request (e.g., a shutter button) is input by a user, the electronic device 400 may obtain the plurality of images consecutively captured for a specified time from the one or more cameras 410 from a time point at which the shooting request is input.

According to an embodiment, in operation 520, the electronic device 400 may perform image registration on the plurality of obtained images. The electronic device 400 may process the plurality of images to be sequentially aligned in the same coordinate system in accordance with a captured order.

According to an embodiment, in operation 530, the electronic device 400 may calculate an edge score for each of the plurality of images. The edge score may be determined based on the number of edges extracted from each image and/or degree of sharpness of the edges, and may correspond to sharpness of each image.

According to an embodiment, in operation 540, the electronic device 400 may determine a reference image, based on the calculated edge score for each image. The electronic device 400 may determine an image of which the calculated edge score is largest among the plurality of images as the reference image. According to various embodiments, when identifying that there are two or more images having the largest edge score among the plurality of images, the electronic device 400 may determine the reference image, based on an image capture time. The electronic device 400 may determine, as the reference image, an image having a capture time that is closest to a time at which the shooting request is input among the images having the largest edge score.

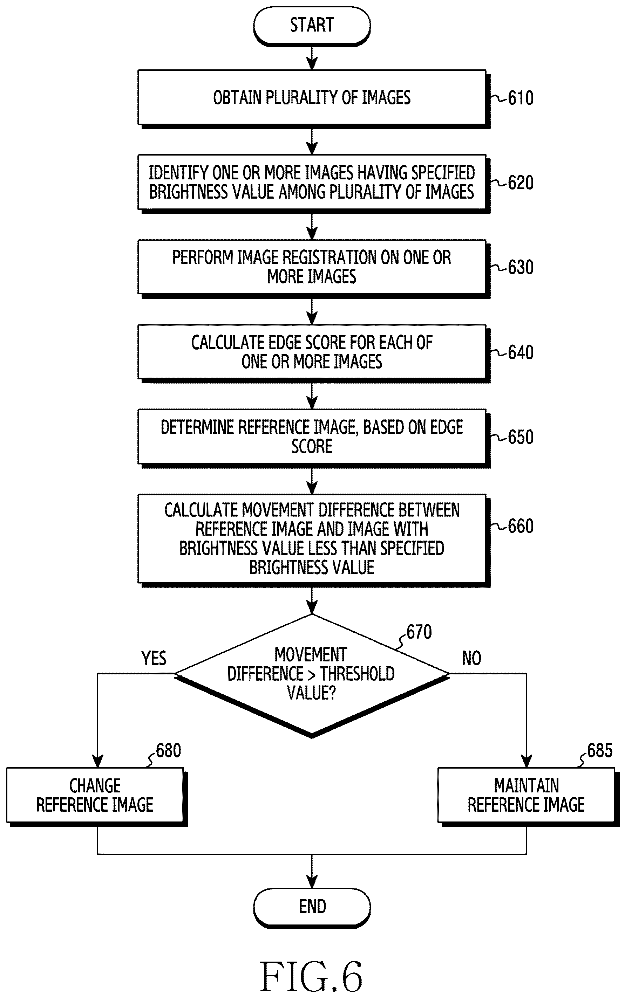

FIG. 6 is a flowchart illustrating a method in which an electronic device determines a reference image among images having different brightness levels according to an embodiment. Operations illustrated in FIG. 6 may be construed as being performed by at least one processor (e.g., the processor 120 of FIG. 1 or the at least one processor 430 of FIG. 4) included in the electronic device 400.

Referring to FIG. 6, in operation 610, the electronic device 400 may obtain a plurality of images having different brightness values by using one or more cameras (e.g., the camera module 180 of FIG. 1 or the one or more cameras 410 of FIG. 4). When identifying that a shooting request (e.g., a shutter button) is input by a user, the electronic device 400 may obtain the plurality of images consecutively captured for a specified time from the one or more cameras 410 from a time point at which the shooting request is input.

According to an embodiment, in operation 620, the electronic device 400 may identify one or more images having a specified brightness value among the plurality of obtained images. The specified brightness value may correspond to optimal brightness of an image configured by the electronic device 400. According to various embodiments, the electronic device 400 may identify a brightness value of each image from the meta-information of each of the multiple images.

According to an embodiment, in operation 630, the electronic device 400 may perform image registration on the one or more images. The electronic device 400 may process the one or more images to be sequentially aligned in the same coordinate system in accordance with a captured order.

According to an embodiment, in operation 640, the electronic device 400 may calculate an edge score for each of the one or more images. The edge score may be determined based on the number of edges extracted from each image and/or degree of sharpness of the edges, and may correspond to sharpness of each image.

According to an embodiment, in operation 650, the electronic device 400 may determine a reference image, based on the calculated edge score for each image. The electronic device 400 may determine an image of which the calculated edge score is the largest among the one or more images as the reference image. According to various embodiments, when identifying that there are two or more images having the largest edge score among the one or more images, the electronic device 400 may determine, as the reference image, an image having a capture time that is closest to a time at which the shooting request is input

According to an embodiment, in operation 660, the electronic device 400 may calculate a movement difference between the reference image and an image with a brightness value less than the specified brightness value. The image having the brightness value less than the specified brightness value may correspond to an image having a largest edge score among images having a brightness value lower than the specified brightness value. The electronic device 400 may identify the images having the brightness value lower than the specified brightness value among the plurality of images, select the image having the largest edge score among the identified images, and calculate a movement difference between the selected image and the reference image.

According to an embodiment, in operation 670, the electronic device 400 may determine whether the calculated movement difference is greater than a threshold value. When a determination result indicates the calculated movement difference is greater than the threshold value (Yes in operation 670), the electronic device 400 may determine that the image having the brightness value less than the specified brightness value is sharper than the reference image, and determine to change the reference image in operation 680. In this case, the electronic device 400 may replace the reference image with the image having the brightness value less than the specified brightness value in operation 680. When the determination result indicates that the calculated movement difference is less than the threshold value (No in operation 670), the electronic device 400 may determine to maintain the reference image determined in operation 650 in operation 685.

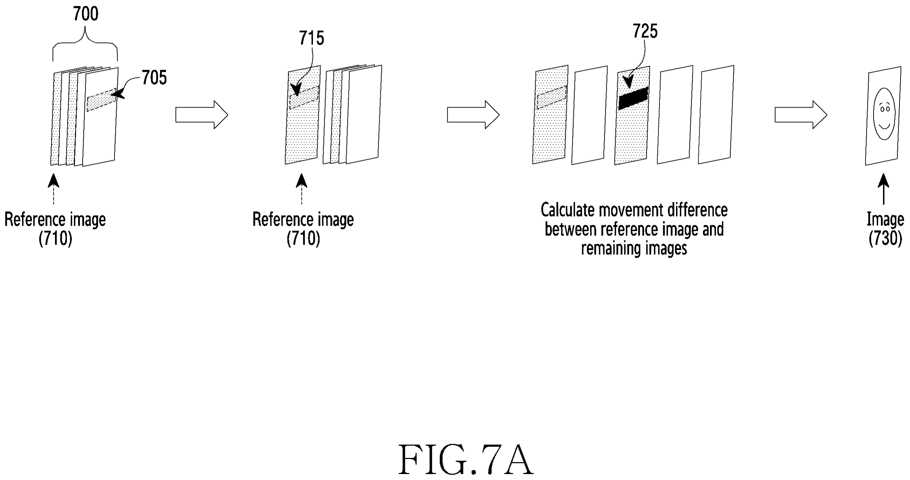

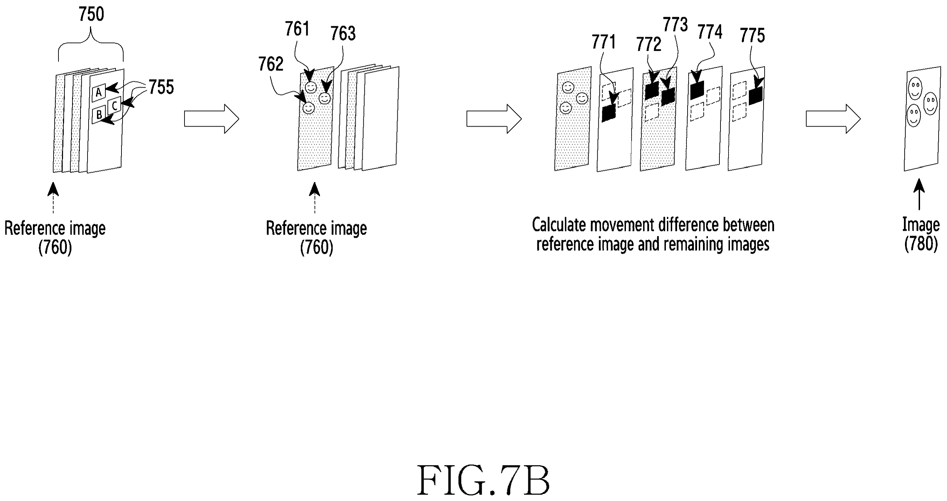

FIG. 7A and FIG. 7B are diagrams illustrating a method in which an electronic device 400 obtains an image by changing an eye area of a reference image according to an embodiment.

Referring to FIG. 7A, when a shooting request (e.g., a shutter button) is input from a user, the electronic device 400 may obtain a plurality of images 700 including a single object by using one or more cameras (e.g., the camera module 180 of FIG. 1 or the one or more cameras 410 of FIG. 4). In FIG. 7A, the plurality of images 700 may correspond to a plurality of frames consecutively captured for a specified time based on a time point at which the shooting request is input, and may have the same brightness value.

In an embodiment, the electronic device 400 may analyze an eye state of the object included in the plurality of images 700, and may identify an image in which the object is in the open-eye state, based on the analysis. The electronic device 400 may extract an eye area image 705 from the image in which the object is in the open-eye state, and may store the same in a memory (e.g., the memory 130 of FIG. 1 or the memory 440 of FIG. 4).

In an embodiment, the electronic device 400 may determine an image having highest sharpness among the plurality of images 700 as a reference image 710. For example, the electronic device 400 may determine sharpness of each image, based on an edge score calculated for each of the plurality of images 700. The edge score may be determined based on the number of edges extracted from each of the plurality of images 700 and/or degree of sharpness of the edges. When there are two or more images having the highest sharpness among the plurality of images 700, the electronic device 400 may determine, as the reference image 710, an image having a capture time that is closest to a time at which the shooting request is input.

In an embodiment, the electronic device 400 may identify the eye state of the object included in the reference image 710. The electronic device 400 may detect an eye area 715 of the object from the reference image 710, and may determine whether the object is in the closed-eye state, based on the detected eye area 715. When identifying that the object is in the closed-eye state, the electronic device 400 may change the eye area 715 in the reference image 710. For example, the electronic device 400 may synthesize the previously stored eye area image 705 and the eye area 715 of the reference image 710, thereby changing the eye area 715 of the reference image 710.

In an embodiment, the electronic device 400 may calculate a movement difference between the reference image 710 having the changed eye area 715 and remaining images other than the reference image 710 among the plurality of images 700. The electronic device 400 may identify an eye area 725 of the object in the closed-eye state in the remaining images, and may calculate a movement difference between the reference image 710 and the remaining images excluding the identified eye area 725. The electronic device 400 may generate an image 730 by synthesizing the plurality of images, based on the calculated movement difference. The image 730 may be a captured result obtained in response to the shooting request and displayed on a display (e.g., the display module 160 of FIG. 1 or the display 420 of FIG. 4).

Referring to FIG. 7B, the electronic device 400 may obtain a plurality of images 750 including a plurality of objects by using the one or more cameras (e.g., the camera module 180 of FIG. 1 or the one or more cameras 410 of FIG. 4) when a shooting request (e.g., a shutter button) is input from a user. In FIG. 7B, the plurality of images 750 may correspond to a plurality of frames consecutively captured for a specified time based on a time point at which the shooting request is input, and may have the same brightness value.

In an embodiment, the electronic device 400 may analyze an eye state of the plurality of objects included in the plurality of images 750, and may identify an image in which each of the plurality of objects is in the open-eye state, based on the analysis. The electronic device 400 may extract an eye area image 755 from the image in which each object is in the open-eye state, and may store the same in the memory (e.g., the memory 130 of FIG. 1 or the memory 440 of FIG. 4). For example, the electronic device 400 may obtain an eye area image of object A from a first frame image among the plurality of images 750, and may obtain an eye area image of object B from a third frame image.

In an embodiment, the electronic device 400 may determine an image having highest sharpness among the plurality of images 750 as a reference image 760. For example, the electronic device 400 may calculate an edge score, based on the number of edges extracted from each of the plurality of images 750 and/or degree of sharpness of the edges, and may determine sharpness of each image, based on the calculated edge score. When there are two or more images having the highest sharpness among the plurality of images 750, the electronic device 400 may determine, as the reference image 760, an image having a capture time that is closest to a time at which the shooting request is input.

In an embodiment, the electronic device 400 may identify the eye state of the plurality of objects included in the reference image 760. The electronic device 400 may detect an eye area 761, 762, and 763 of each of the plurality of objects from the reference image 760, and may identify whether the object is in the closed-eye state, based on the detected eye area 761, 762, and 763. The electronic device 400 may change the eye area 761, 762, and 763 of the object in the closed-eye state in the reference image 760. For example, the electronic device 400 may synthesize the eye area 761, 762, and 763 in the reference image 760 and the eye area image 755 previously stored corresponding to each object, thereby changing the eye area 761, 762, and 763 of the reference image 760.

In an embodiment, the electronic device 400 may calculate a movement difference between the reference image 760 having the changed eye area 761, 762, and 763 and remaining images other than the reference image 760 among the plurality of images 750. The electronic device 400 may identify an eye area 771, 772, 773, 774, and 775 of the plurality of objects in the closed-eye state in the remaining images, and may calculate a movement difference between the reference image 760 and the remaining images excluding the identified eye area 771, 772, 773, 774, and 775. The electronic device 400 may generate an image 780 by synthesizing the plurality of images, based on the calculated movement difference. The image 780 may be a captured result obtained in response to the shooting request and displayed on a display (e.g., the display module 160 of FIG. 1 or the display 420 of FIG. 4).

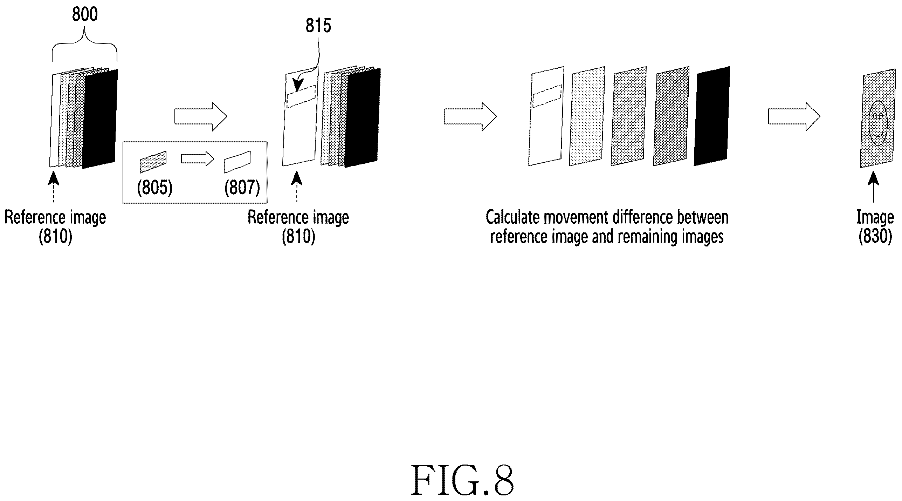

FIG. 8 is a diagram illustrating a method in which an electronic device 400 changes an eye area of a reference image by using eye area images of images having different brightness levels according to an embodiment.

Referring to FIG. 8, when a shooting request (e.g., a shutter button) is input from a user, the electronic device 400 may obtain a plurality of images 800 including one or more objects by using one or more cameras (e.g., the camera module 180 of FIG. 1 or the one or more cameras 410 of FIG. 4). In FIG. 8, the plurality of images 800 may correspond to a plurality of frames consecutively captured for a specified time based on a time point at which the shooting request is input, and may have different brightness values.

In an embodiment, the electronic device 400 may analyze an eye state of the one or more objects included in the plurality of images 800, and may identify an image in which each of the one or more objects is in the open-eye state. The electronic device 400 may extract an eye area image 805 from the image in which the one or more objects are in the open-eye state, and may store the same in a memory (e.g., the memory 130 of FIG. 1 or the memory 440 of FIG. 4).

In an embodiment, the electronic device 400 may determine an image having a specified brightness value among the plurality of images 800 as a reference image 810. When there are two or more images having the specified brightness value among the plurality of images 800, the electronic device 400 may determine the reference image 810, based on sharpness and/or capture time of each image.

In an embodiment, the electronic device 400 may identify an eye state of one or more objects included in the reference image 810. The electronic device 400 may detect an eye area 815 of the one or more objects from the reference image 810, and may determine whether the one or more objects are in the closed-eye state, based on the detected eye area 815. The electronic device 400 may change the eye area 815 of an object in the closed-eye state in the reference image 810. According to various embodiments, when identifying that brightness of the previously stored eye area image 805 of the one or more objects and brightness of the reference image 810 are different, the electronic device 400 may match the brightness of the previously stored eye area image 805 to the brightness of the reference image 810. The electronic device 400 may synthesize the brightness-matched eye area image 807 and the eye area 815 of the reference image 810, thereby changing the eye area 815 of the reference image 810.

In an embodiment, the electronic device 400 may calculate a movement difference between the reference image 810 having the changed eye area 815 and remaining images other than the reference image 810 among the plurality of images 800. The electronic device 400 may identify an eye area of the one or more objects in the closed-eye state in the remaining images, and may calculate a movement difference between the reference image 810 and the remaining images excluding the identified eye area. The electronic device 400 may generate an image 830 by synthesizing the plurality of images, based on the calculated movement difference. The image 830 may be a captured result obtained in response to the shooting request and displayed on a display (e.g., the display module 160 of FIG. 1 or the display 420 of FIG. 4).

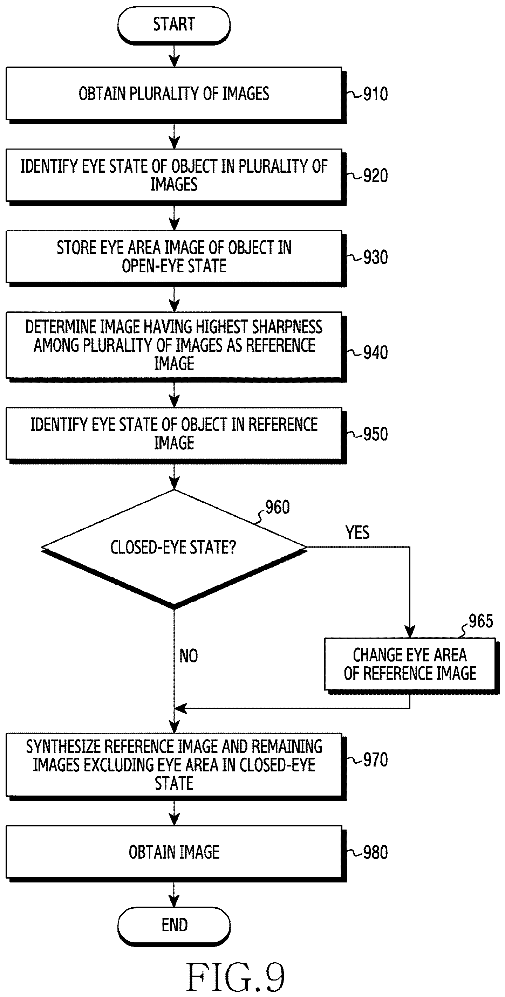

FIG. 9 is a flowchart illustrating an operating method in which an electronic device 400 obtains an image by changing an eye area of a reference image according to an embodiment. Operations illustrated in FIG. 9 may be construed as being performed by at least one processor (e.g., the processor 120 of FIG. 1 or the at least one processor 430 of FIG. 4) included in the electronic device 400.

Referring to FIG. 9, in operation 910, the electronic device 400 may obtain a plurality of images by using one or more cameras (e.g., the camera module 180 of FIG. 1 or the one or more cameras 410 of FIG. 4). When identifying that a shooting request (e.g., a shutter button) is input by a user, the electronic device 400 may obtain the plurality of images consecutively captured for a specified time from the one or more cameras 410 from a time point at which the shooting request is input. The plurality of images may include one or more objects. According to various embodiments, the electronic device 400 may perform image registration of the plurality of obtained images, based on the same coordinate system.

According to an embodiment, in operation 920, the electronic device 400 may identify an eye state of the one or more objects included in the plurality of images. In operation 920, the electronic device 400 may distinguish the plurality of images according to the eye state of the one or more objects, and may select an image in which the one or more objects are in the open-eye state among the plurality of images.

According to an embodiment, in operation 930, the electronic device 400 may store an eye area image of the one or more objects in the open-eye state among the plurality of images in a memory (e.g., the memory 130 of FIG. 1 or the memory 440 of FIG. 4). In operation 930, the electronic device 400 may extract an eye area image corresponding to each object from the image in which the one or more objects are in the open-eye state, and may store the extracted eye area image in the memory 440. The eye area image may be an image corresponding to a specified range including both eyes and eyelids on a face of each object.

According to an embodiment, in operation 940, the electronic device 400 may determine an image having highest sharpness among the plurality of images as a reference image. For example, the electronic device 400 may calculate an edge score, based on edges extracted for each of the plurality of images, and may determine an image of which the calculated edge score is largest as the reference image. According to various embodiments, when brightness values of the plurality of images are different, the electronic device 400 may determine, as the reference image, an image having a specified brightness value and the highest sharpness among the plurality of images. According to various embodiments, when there are two or more images having the highest sharpness among the plurality of images, the electronic device 400 may select, as the reference image, an image having a capture time that is closest to the time at which the shooting request is input.

According to an embodiment, in operation 950, the electronic device 400 may identify the eye state of the one or more objects included in the reference image. In operation 950, the electronic device 400 may detect an eye area of each object in the reference image, and may identify whether the object is in the closed-eye state or in the open-eye state from the detected eye area of each object.

According to an embodiment, in operation 960, the electronic device 400 may determine whether each of the one or more objects included in the reference image is in the closed-eye state. When a determination result indicates that at least one object is identified as being in the closed-eye state (Yes in operation 960), the electronic device 400 may change an eye area of the at least one object in the reference image in operation 965. For example, the electronic device 400 may synthesize the eye area of the at least one object in the reference image and a previously stored eye area image. The previously stored eye area image may correspond to the eye area image in which the at least one object is in the open-eye state, which is stored in operation 930. When the at least one object in the closed-eye state is identified in the reference image, the electronic device 400 may obtain the eye area image in which the at least one object is in the open-eye state from the memory 440, and may replace the eye area of the at least one object in the reference image with the obtained eye area image. According to various embodiments, when brightness of the eye area image and brightness of the reference image are different, the electronic device 400 may match the brightness of the eye area image to the brightness of the reference image and then synthesize the matched eye area image and the eye area of the at least one object in the reference image. In operation 970, the electronic device 400 may calculate a movement difference between the reference image having the changed eye area and remaining images excluding the eye area in the closed-eye state among the plurality of images, and may synthesize the plurality of images in consideration of the calculated movement difference.

When the determination result indicates that an object in the closed-eye state is not identified (No in operation 960), the electronic device 400 may not change the reference image, and may calculate a movement difference between the reference image and the remaining image excluding the eye area in the closed-eye state among the plurality of images, and synthesize the plurality of images, based on the calculated movement difference in operation 970.

According to an embodiment, in operation 980, the electronic device 400 may obtain an image generated by synthesizing the plurality of images as a captured result in response to the shooting request. The electronic device 400 may display the obtained image on a display (e.g., the display module 160 of FIG. 1 or the display 420 of FIG. 4).

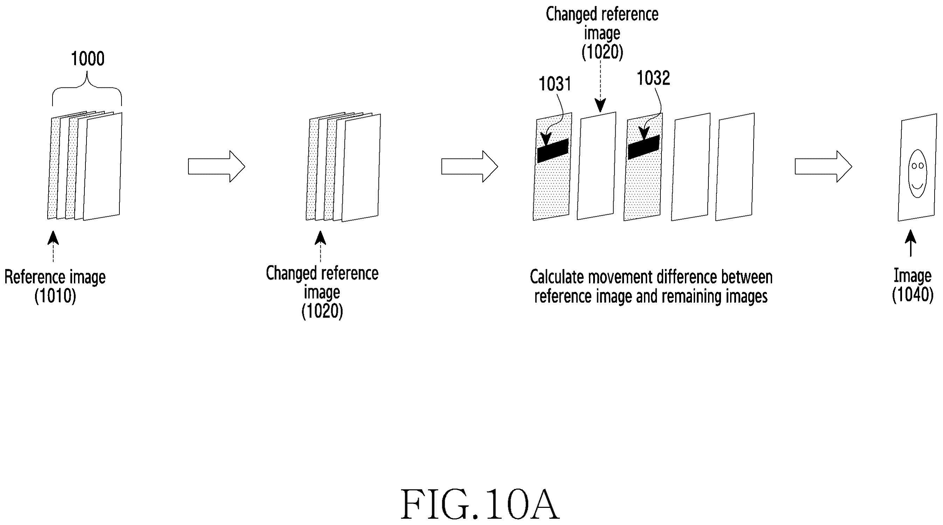

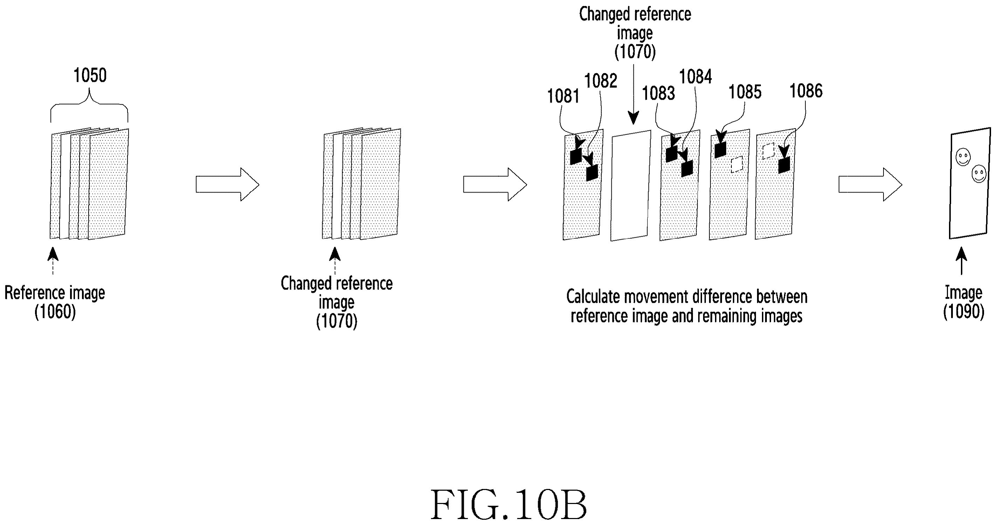

FIG. 10A and FIG. 10B are diagrams illustrating a method in which an electronic device 400 obtains an image by changing a reference image according to an embodiment.

Referring to FIG. 10A, when a shooting request (e.g., a shutter button) is input from a user, the electronic device 400 may obtain a plurality of images 1000 including a single object by using one or more cameras (e.g., the camera module 180 of FIG. 1 or the one or more cameras 410 of FIG. 4). In FIG. 10A, the plurality of images 1000 may correspond to a plurality of frames consecutively captured for a specified time based on a time point at which the shooting request is input, and may have the same brightness value.

In an embodiment, the electronic device 400 may determine an image having highest sharpness as a reference image 1010. For example, the electronic device 400 may determine sharpness of each image, based on an edge score calculated for each of the plurality of images 1000. The edge score may be determined based on the number of edges extracted from each of the plurality of images 1000 and/or degree of sharpness of the edges. When there are two or more images having the highest sharpness among the plurality of images 1000, the electronic device 400 may determine, as the reference image 1010, an image having a capture time that is closest to a time at which the shooting request is input.

In an embodiment, the electronic device 400 may identify an eye state of an object included in the reference image 1010. The electronic device 400 may identify whether the object is in the closed-eye state, based on an eye area of the object in the reference image 1010. When identifying that the object is in the closed-eye state, the electronic device 400 may replace the reference image 1010 with an image in which the object is in the open-eye state.

In an embodiment, the electronic device 400 may select one or more candidate images having an edge score of a specified value or greater among the plurality of images 1000, and may determine an image in which the object in the open-eye state among the one or more candidate images as a changed reference image 1020.

In an embodiment, the electronic device 400 may calculate a movement difference between the changed reference image 1020 and remaining images other than the reference image 1020 among the plurality of images 1000. The electronic device 400 may identify an eye area 1031 and 1032 of the object in the closed-eye state in the remaining images, and may calculate a movement difference between the reference image 1020 and the remaining images excluding the identified eye area 1031 and 1032. The electronic device 400 may generate an image 1040 by synthesizing the plurality of images, based on the calculated movement difference. The image 1040 may be a captured result obtained in response to the shooting request and displayed on a display (e.g., the display module 160 of FIG. 1 or the display 420 of FIG. 4).

Referring to FIG. 10B, the electronic device 400 may obtain a plurality of images 1050 including a plurality of objects by using the one or more cameras (e.g., the camera module 180 of FIG. 1 or the one or more cameras 410 of FIG. 4) when a shooting request (e.g., a shutter button) is input from a user. In FIG. 10B, the plurality of images 1050 may correspond to a plurality of frames consecutively captured for a specified time based on a time point at which the shooting request is input, and may have the same brightness value.

In an embodiment, the electronic device 400 may determine an image having highest sharpness among the plurality of images 1050 as a reference image 1060. For example, the electronic device 400 may calculate an edge score, based on the number of edges extracted from each of the plurality of images 1050 and/or degree of sharpness of the edges, and may determine sharpness of each image, based on the calculated edge score. When there are two or more images having the highest sharpness among the plurality of images 1050, the electronic device 400 may determine, as the reference image 1060, an image having a capture time that is closest to a time at which the shooting request is input.

In an embodiment, the electronic device 400 may identify an eye state of the plurality of objects included in the reference image 1060. The electronic device 400 may identify whether each object is in the closed-eye state, based on an eye area of the plurality of objects in the reference image 1060. When identifying that at least one object in the closed-eye state is included in the reference image 1060, the electronic device 400 may determine to change the reference image 1060.

In an embodiment, the electronic device 400 may select one or more candidate images having an edge score of a specified value or greater among the plurality of images 1050, and may determine an image in which a largest number of objects are in the open-eye state among the one or more candidate images as a changed reference image 1070.

In an embodiment, the electronic device 400 may calculate a movement difference between the changed reference image 1070 and remaining images other than the reference image 1070 among the plurality of images 1050. The electronic device 400 may identify an eye area 1081, 1082, 1083, 1084, 1085, and 1086 of the plurality of objects in the closed-eye state in the remaining images, and may calculate a movement difference between the reference image 1070 and the remaining images excluding the identified eye area 1081, 1082, 1083, 1084, 1085, and 1086. The electronic device 400 may generate an image 1090 by synthesizing the plurality of images, based on the calculated movement difference. The image 1090 may be a captured result obtained in response to the shooting request and displayed on a display (e.g., the display module 160 of FIG. 1 or the display 420 of FIG. 4).

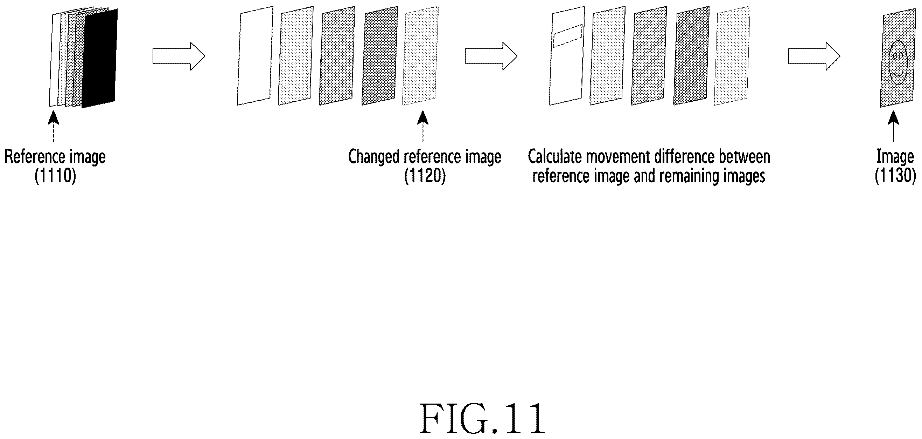

FIG. 11 is a diagram illustrating a method in which an electronic device 400 changes a reference image by using images having different brightness levels according to an embodiment.

Referring to FIG. 11, when a shooting request (e.g., a shutter button) is input from a user, the electronic device 400 may obtain a plurality of images 1100 including one or more objects by using one or more cameras (e.g., the camera module 180 of FIG. 1 or the one or more cameras 410 of FIG. 4). In FIG. 8, the plurality of images 1100 may correspond to a plurality of frames consecutively captured for a specified time based on a time point at which the shooting request is input, and may have different brightness values.

In an embodiment, the electronic device 400 may determine an image having a specified brightness value among the plurality of images 1100 as a reference image 1110. When there are two or more images having the specified brightness value among the plurality of images 1100, the electronic device 400 may determine the reference image 1110, based on sharpness and/or capture time of each image.

In an embodiment, the electronic device 400 may identify an eye state of one or more objects included in the reference image 1110. The electronic device 400 may identify whether each object is in the closed-eye state, based on an eye area of the one or more objects in the reference image 1110. When identifying that at least one object in the closed-eye state is included in the reference image 1110, the electronic device 400 may determine to change the reference image 1110.

In an embodiment, the electronic device 400 may select one or more candidate images, based on detected sharpness of each of the plurality of images 1100. The one or more candidate images may be images each having a calculated edge score of a specified value or greater. The electronic device 400 may identify an image in which the one or more objects are in the open-eye state among the one or more candidate images (or an image in which a largest number of objects are in the open-eye state), and may match brightness of the identified image to brightness of the reference image 1110. The electronic device 400 may determine the brightness-matched image as a changed reference image 1120.

In an embodiment, the electronic device 400 may calculate a movement difference between the changed reference image 1120 and remaining images other than the reference image 1120 among the plurality of images 1100. The electronic device 400 may identify an eye area of the one or more objects in the closed-eye state in the remaining images, and may calculate a movement difference between the reference image 1120 and the remaining images excluding the identified eye area. The electronic device 400 may generate an image 1130 by synthesizing the plurality of images, based on the calculated movement difference. The image 1130 may be a captured result obtained in response to the shooting request and displayed on a display (e.g., the display module 160 of FIG. 1 or the display 420 of FIG. 4).

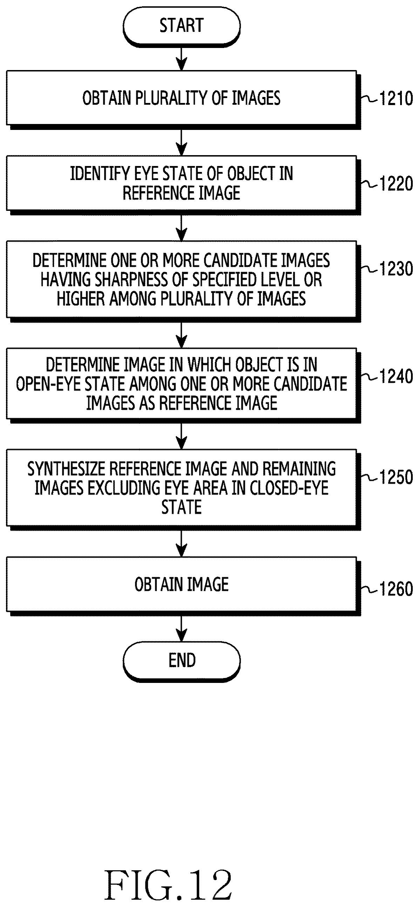

FIG. 12 is a flowchart illustrating an operating method in which an electronic device obtains an image by changing a reference image according to an embodiment. Operations illustrated in FIG. 12 may be construed as being performed by at least one processor (e.g., the processor 120 of FIG. 1 or the at least one processor 430 of FIG. 4) included in the electronic device 400.

Referring to FIG. 12, in operation 1210, the electronic device 400 may obtain a plurality of images by using one or more cameras (e.g., the camera module 180 of FIG. 1 or the one or more cameras 410 of FIG. 4). When identifying that a shooting request (e.g., a shutter button) is input by a user, the electronic device 400 may obtain the plurality of images consecutively captured for a specified time from the one or more cameras 410 from a time point at which the shooting request is input. The plurality of images may include one or more objects. According to various embodiments, the electronic device 400 may perform image registration of the plurality of obtained images, based on the same coordinate system. In operation 1020, the electronic device 400 may determine an image having highest sharpness among the plurality of images as a reference image. For example, the electronic device 400 may calculate an edge score, based on edges extracted for each of the plurality of images, and may determine an image of which the calculated edge score is largest as the reference image. According to various embodiments, when brightness values of the plurality of images are different, the electronic device 400 may determine, as the reference image, an image having a specified brightness value and the highest sharpness among the plurality of images. According to various embodiments, when there are two or more images having the highest sharpness among the plurality of images, the electronic device 400 may select, as the reference image, an image having a capture time that is closest to the time at which the shooting request is input.

According to an embodiment, in operation 1220, the electronic device 400 may identify an eye state of one or more objects included in the reference image. In operation 1220, the electronic device 400 may detect an eye area of each object in the reference image, and may identify whether the object is in the closed-eye state or in the open-eye state from the detected eye area of each object. When identifying that at least one object in the closed-eye state is included in the reference image, the electronic device 400 may determine to change the reference image.

According to an embodiment, in operation 1230, the electronic device 400 may determine one or more candidate images having a sharpness of a specified level or higher among the plurality of images. For example, the electronic device 400 may select, as the candidate images, one or more images having an edge score of a specified value or greater among the plurality of images.

According to an embodiment, in operation 1240, the electronic device 400 may determine an image in which the one or more objects are in the open-eye state among the one or more candidate images as a changed reference image. According to various embodiments, when two or more objects are included in the candidate image, the electronic device 400 may determine an image in which a largest number of objects are in the open-eye state as the changed reference image. According to various embodiments, when brightness of the changed reference image is different from brightness of the previous reference image selected in operation 1210, the electronic device 400 may match the brightness of the changed reference image to the brightness of the previous reference image.

According to various embodiments, when an object in the closed-eye state is included in the changed reference image, the electronic device 400 may synthesize an eye area of the object in the changed reference image and a previously stored eye area image, thereby changing the eye area of the object. The previously stored eye area image is an image corresponding to the eye area of the object, extracted from an image in which the object is in the open-eye state among the plurality of images, and may be obtained from a memory (e.g., the memory 130 of FIG. 1 or the memory 440 of FIG. 4).

According to an embodiment, in operation 1250, the electronic device 400 may calculate a movement difference between the changed reference image and remaining images excluding the eye area in the closed-eye state among the plurality of images, and may synthesize the plurality of images in consideration of the calculated movement difference.

According to an embodiment, in operation 1260, the electronic device 400 may obtain an image generated by synthesizing the plurality of images as a captured result in response to the shooting request. The electronic device 400 may display the obtained image on a display (e.g., the display module 160 of FIG. 1 or the display 420 of FIG. 4).

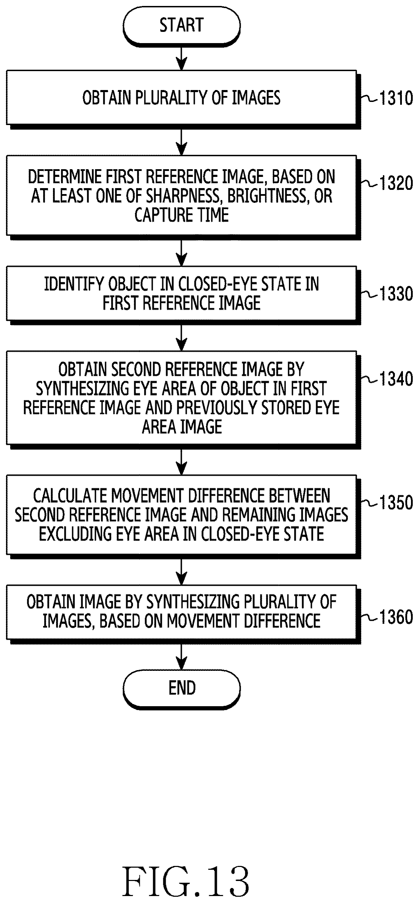

FIG. 13 is a flowchart illustrating an operating method of an electronic device 400 according to an embodiment. According to an embodiment, the electronic device 400 may be a device that performs image processing for obtaining an image matching a user's intention at a user-desired timing by a single shoot, and may correspond to the electronic device 101 illustrated in FIG. 1. Operations illustrated in FIG. 13 may be performed by at least one processor (e.g., the processor 120 of FIG. 1 or the at least one processor 430 of FIG. 4) included in the electronic device 400.

Referring to FIG. 13, in operation 1310, the electronic device 400 may obtain a plurality of images including one or more objects by using one or more cameras (e.g., the camera module 180 of FIG. 1 or the one or more cameras 410 of FIG. 4) in response to a shooting request from a user. The plurality of images may be a plurality of image frames consecutively captured based on a time point at which the shooting request is input.

According to various embodiments, when obtaining the plurality of images, the electronic device 400 may detect an eye area of the one or more objects in each of the plurality of images, and may analyze a state of the detected eye area. The electronic device 400 may identify that an image in which the one or more objects are in the open-eye state among the plurality of images, based on the analysis, and may extract an eye area image from the image in which the one or more objects are in the open-eye state and store the eye area image in a memory (e.g., the memory 130 of FIG. 1 or the memory 440 of FIG. 4). When two or more objects are included in the plurality of images, the electronic device 400 may identify an image in which each object is in the open-eye state, and may extract an eye area image from the image in which each object is in the open-eye state and store the eye area image in the memory 440. The eye area image may be an image corresponding to a specified range including both eyes and eyelids on a face of each object.

According to an embodiment, in operation 1320, the electronic device 400 may determine a first reference image that serves as a base when generating a captured image among the plurality of images. The electronic device 400 may select the first reference image, based on at least one of sharpness or brightness detected from each image, or capture time of each image. For example, the electronic device 400 may identify at least one image having a specified brightness value among the plurality of images, and may determine an image having highest sharpness among the at least one image as the first reference image. When there is no image having the specified brightness value, the electronic device 400 may determine an image having highest sharpness among the plurality of images as the first reference image. The electronic device 400 may calculate an edge score, based on edges extracted for each of the plurality of images, and may determine sharpness of each image, based on the calculated edge score. When identifying that there are two or more images having the highest sharpness among the plurality of images or the at least one image, the electronic device 400 may determine an image having a capture time closest to the time when the shooting request is input as the first reference image.

According to various embodiments, when the brightness of the plurality of images is different from each other, the electronic device 400 may determine an image having a specified brightness value among the plurality of images as the first reference image, and may change the first reference image considering the sharpness of the image. The electronic device 400 may identify an image not having the specified brightness value among the plurality of images, and may identify a first image having highest sharpness among the images not having the specified brightness value. The sharpness may be determined based on an edge score calculated for the plurality of images. The electronic device 400 may determine whether the first image has a sharpness exceeding a specified value compared to the first reference image. For example, the electronic device 400 may calculate a movement difference between the first reference image and the first image, and may replace the first reference image with the first image when the calculated movement difference is greater than a threshold value.

According to an embodiment, in operation 1330, the electronic device 400 may identify at least one object in the closed-eye state in the first reference image. According to various embodiments, when identifying the at least one object in the closed-eye state in the first reference image, the electronic device 400 may determine that the first reference image needs to be changed. In this case, the electronic device 400 may select one or more candidate images having a sharpness of the threshold level or higher, based on the edge score calculated for each of the plurality of images, and may replace the first reference image with an image in which the one or more objects are in the open-eye state among the one or more candidate images. When two or more objects are included in the one or more candidate images, the electronic device 400 may replace the first reference image with an image in which a largest number of objects are in the open-eye state. According to various embodiments, the electronic device 400 may determine whether the first reference image and the image in which the one or more objects are in the open-eye state have the same brightness. When determining that the brightness of the first reference image is different from that of the image in which the one or more objects are in the open-eye state, the electronic device 400 may match the brightness of the image in which the one or more objects are in the open-eye state to the brightness of the first reference image, and may replace the first reference image with the brightness-matched image.

According to an embodiment, in operation 1340, when the electronic device 400 identifies an object in the closed-eye state among the one or more objects included in the first reference image, the electronic device 400 may determine to change an eye area of the identified object. The electronic device 400 may synthesize the eye area of the at least one object identified from the first reference image and a previously stored eye area image to change the eye area of the at least one object within the first reference image. The eye area image may be an image stored by extracting the eye area of the at least one object from the image in which the at least one object is in the open-eye state among the plurality of images. When the at least one object is identified in the first reference image, the electronic device 400 may load the previously stored eye area image from the memory (e.g., the memory 130 of FIG. 1 or the memory 440 of FIG. 4), and may synthesize the previously stored eye area image with the eye area of the at least one object in the first reference image, thereby generating a second reference image. According to various embodiments, the electronic device 400 may determine whether the first reference image and the previously stored eye area image have the same brightness. When determining that the brightness of the first reference image and the brightness of the previously stored eye area image are different, the electronic device 400 may match the brightness of the eye area image to the brightness of the first reference image, and then synthesize the matched eye area image and the eye area of the at least one object in the first reference image, thereby obtaining the second reference image. When determining that the brightness of the first reference image and the brightness of the previously stored eye area image are the same, the electronic device 400 may synthesize the eye area of the at least one object in the first reference image and the eye area image without brightness matching between the two images, thereby obtaining the second reference image.

According to an embodiment, in operation 1350, the electronic device 400 may calculate a movement difference between the second reference image and remaining images other than the first reference image among the plurality of images. Here, the electronic device 400 may identify an eye area of an object in the closed-eye state in the remaining images, and may calculate a movement difference between the second reference image and the remaining images excluding the identified eye area. According to various embodiments, the electronic device 400 may generate a motion map, based on the calculated movement difference, and may synthesize the plurality of images, based on the generated motion map.

According to an embodiment, in operation 1360, the electronic device 400 may obtain an image by synthesizing the plurality of images, based on the calculated movement difference, and may display the obtained image on a display 420 as a captured result in response to the shooting request.

An electronic device (e.g., the electronic device 400) according to an embodiment may include one or more cameras 410, a display 420, at least one processor 430 operatively connected to the one or more cameras and the display, and a memory 440 operatively connected to the at least one processor, and the memory may store instructions that, when executed, cause the at least one processor to obtain a plurality of images including one or more objects by using the one or more cameras in response to a shooting request from a user, determine a first reference image among the plurality of images, based on at least one of sharpness or brightness detected from each image, or capture time of each image, identify at least one object in a closed-eye state in the first reference image, obtain a second reference image by synthesizing an eye area of the at least one object in the first reference image and a previously stored eye area image, calculate a movement difference between the second reference image and remaining images excluding an eye area in the closed-eye state from the plurality of images, and display an image obtained by synthesizing the plurality of images, based on the calculated movement difference, on the display.

In an embodiment, the instructions may cause the at least one processor to identify an image in which the one or more objects are in an open-eye state by analyzing the plurality of images, and store an eye area image extracted from the image in which the one or more objects are in the open-eye state and information related to the image in which the one or more objects are in the open-eye state in the memory.

In an embodiment, the instructions may cause the at least one processor to store an eye area image extracted for each of the one or more objects when the one or more objects are two or more.

In an embodiment, the instructions may cause the at least one processor to identify at least one image having a specified brightness value among the plurality of images, and determine an image having highest sharpness among the at least one image as the first reference image.

In an embodiment, the instructions may cause the at least one processor to determine an image having a capture time closest to an input time of the shooting request as the first reference image when there are two or more images having the highest sharpness.

In an embodiment, the instructions may cause the at least one processor to calculate a movement difference between the first reference image and a first image having the highest sharpness among images not having the specified brightness value, and replace the first reference image with the first image when the calculated movement difference is greater than a threshold value.

In an embodiment, the instructions may cause the at least one processor to determine whether the first reference image needs to be changed, based on an eye state of the one or more objects, determine one or more candidate images having a sharpness of a threshold level or higher among the plurality of images when determining that the first reference image needs to be changed, and change the first reference image, based on an image in which the one or more objects are in an open-eye state among the one or more candidate images

In an embodiment, the instructions may cause the at least one processor to select the first reference image, based on an image in which a largest number of objects are in the open-eye state when two or more objects are included in the one or more candidate images.

In an embodiment, the instructions may cause the at least one processor to match brightness of the image in which the one or more objects are in the open-eye state to brightness of the first reference image when the brightness of the first reference image and the brightness of the image in which the one or more objects are in the open-eye state are different.

In an embodiment, the instructions may cause the at least one processor to match brightness of the previously stored eye area image to brightness of the first reference image when the brightness of the first reference image and the brightness of the eye area image are different.

An operating method of an electronic device (e.g., the electronic device 400) according to an embodiment may include obtaining a plurality of images including one or more objects by using one or more cameras (410), determining a first reference image among the plurality of images, based on at least one of sharpness or brightness detected from each image, or capture time of each image, identifying at least one object in a closed-eye state in the first reference image, obtaining a second reference image by synthesizing an eye area of the at least one object in the first reference image and a previously stored eye area image, calculating a movement difference between the second reference image and remaining images excluding an eye area in the closed-eye state from the plurality of images, and displaying an image obtained by synthesizing the plurality of images, based on the calculated movement difference.

In an embodiment, the method may include identifying an image in which the one or more objects are in an open-eye state by analyzing the plurality of images, and storing an eye area image extracted from the image in which the one or more objects are in the open-eye state and information related to the image in which the one or more objects are in the open-eye state in a memory 440.

In an embodiment, the storing of the eye area image may include storing an eye area image extracted for each of the one or more objects when the one or more objects are two or more.

In an embodiment, the determining of the first reference image may include identifying at least one image having a specified brightness value among the plurality of images, and determining an image having highest sharpness among the at least one image as the first reference image.

In an embodiment, the determining of the image having the highest sharpness as the first reference image may include determining an image having a capture time closest to an input time of the shooting request as the first reference image when there are two or more images having the highest sharpness.

In an embodiment, the determining of the first reference image may include calculating a movement difference between the first reference image and a first image having the highest sharpness among images not having the specified brightness value, and replacing the first reference image with the first image when the calculated movement difference is greater than a threshold value.

In an embodiment, the method may further include determining whether the first reference image needs to be changed, based on an eye state of the one or more objects, determining one or more candidate images having a sharpness of a threshold level or higher among the plurality of images when determining that the first reference image needs to be changed, and changing the first reference image, based on an image in which the one or more objects are in an open-eye state among the one or more candidate images.

In an embodiment, the changing of the first reference image may include selecting the first reference image, based on an image in which a largest number of objects are in the open-eyed state, when two or more objects are included in the one or more candidate images.

In an embodiment, the changing of the first reference image may include matching brightness of the image in which the one or more objects are in the open-eye state to brightness of the first reference image when the brightness of the first reference image and the brightness of the image in which the one or more objects are in the open-eye state are different.

In an embodiment, the obtaining of the second reference image may include matching brightness of the previously stored eye area image to brightness of the first reference image when the brightness of the first reference image and the brightness of the eye area image are different.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (400) comprising:
one or more cameras (410);
a display (420);
at least one processor (430); and
a memory (440) storing instructions,
wherein the instructions, when executed by the at least one processor (430), cause the electronic device (400) to:
obtain a plurality of images comprising one or more objects by using the one or more cameras (410), in response to a shooting request from a user;
determine a first reference image among the plurality of images, based on at least one of sharpness or brightness detected from each of the images, or capture time of each of the images;
identify at least one object in a closed-eye state from the first reference image;
obtain a second reference image by combining a prestored eye area image with an eye area of the at least one object in the first reference image;
calculate a movement difference between the second reference image and remaining images excluding an eye area in the closed-eye state from the plurality of images; and
display, on the display (420), an image obtained by synthesizing the plurality of images, based on the calculated movement difference.

2. The electronic device of claim 1, wherein the instructions, when executed by the at least one processor (430), cause the electronic device (400) to:
analyzing the plurality of images to identify an image in which the one or more objects are in an open-eye state; and
store, in the memory (440), an eye area image extracted from the image in which the one or more objects are in the open-eye state and information related to the image in which the one or more objects are in the open-eye state.

3. The electronic device of claim 1, wherein the instructions, when executed by the at least one processor (430), cause the electronic device (400) to:
identify at least one image having a specified brightness value among the plurality of images; and
determine an image having highest sharpness among the at least one image as the first reference image.

4. The electronic device of claim 3, wherein the instructions, when executed by the at least one processor (430), cause the electronic device (400) to, in case that there are two or more images having the highest sharpness, determine an image having a capture time closest to an input time of the shooting request as the first reference image.

5. The electronic device of claim 3, wherein the instructions, when executed by the at least one processor (430), cause the electronic device (400) to:
calculate a movement difference between the first reference image and a first image having the highest sharpness among images not having the specified brightness value; and
in case that the calculated movement difference is greater than a threshold value, replace the first reference image with the first image.

6. The electronic device of claim 1, wherein the instructions, when executed by the at least one processor (430), cause the electronic device (400) to:
determine whether the first reference image needs to be changed, based on an eye state of the one or more objects;
in case of determining that the first reference image needs to be changed, determine one or more candidate images having a sharpness equal to or greater than a threshold level among the plurality of images;
change the first reference image, based on an image in which the one or more objects are in an open-eye state among the one or more candidate images; and
in case that the brightness of the first reference image is different from the brightness of the image in which the one or more objects are in the open-eye state, match the brightness of the image in which the one or more objects are in the open-eye state to the brightness of the first reference image.

7. The electronic device of claim 6, wherein the instructions, when executed by the at least one processor (430), cause the electronic device (400) to, in case that two or more objects are included in the one or more candidate images, select the first reference image, based on an image having a largest number of objects in the open-eyed state,.

8. The electronic device of claim 1, wherein the instructions, when executed by the at least one processor (430), cause the electronic device (400) to, in case that the brightness of the first reference image is different from the brightness of the prestored eye area image, match the brightness of the eye area image to the brightness of the first reference image.

9. An operating method of an electronic device (400), the method comprising:
obtaining a plurality of images comprising one or more objects by using one or more cameras (410);
determining a first reference image among the plurality of images, based on at least one of sharpness or brightness detected from each of the images, or capture time of each of the images;
identifying at least one object in a closed-eye state from the first reference image;
obtaining a second reference image by combining a prestored eye area image with an eye area of the at least one object in the first reference image;
calculating a movement difference between the second reference image and remaining images excluding an eye area in the closed-eye state from the plurality of images; and
displaying an image obtained by synthesizing the plurality of images, based on the calculated movement difference.

10. The method of claim 9, comprising:
analyzing the plurality of images to identify an image in which the one or more objects are in an open-eye state; and
storing, in a memory, an eye area image extracted from the image in which the one or more objects are in the open-eye state and information related to the image in which the one or more objects are in the open-eye state.

11. The method of claim 9, wherein the determining of the first reference image comprises:
identifying at least one image having a specified brightness value among the plurality of images; and
determining an image having highest sharpness among the at least one image as the first reference image, and
wherein the determining of the image having the highest sharpness as the first reference image comprises, in case that there are two or more images having the highest sharpness, determining an image having a capture time closest to an input time of the shooting request as the first reference image.

12. The method of claim 11, wherein the determining of the first reference image comprises:
calculating a movement difference between the first reference image and a first image having the highest sharpness among images not having the specified brightness value; and
in case that the calculated movement difference is greater than a threshold value, replacing the first reference image with the first image.

13. The method of claim 9, further comprising:
determining whether the first reference image needs to be changed, based on an eye state of the one or more objects;
in case of determining that the first reference image needs to be changed, determining one or more candidate images having a sharpness equal to or greater than a threshold level among the plurality of images; and
changing the first reference image, based on an image in which the one or more objects are in an open-eye state among the one or more candidate images, and
wherein the changing of the first reference image comprises, in case that the brightness of the first reference image is different from the brightness of the image in which the one or more objects are in the open-eye state, matching the brightness of the image in which the one or more objects are in the open-eye state to the brightness of the first reference image.

14. The method of claim 13, wherein the changing of the first reference image comprises, in case that two or more objects are included in the one or more candidate images, selecting the first reference image, based on an image having a largest number of objects in the open-eyed state.

15. The method of claim 9, wherein the obtaining of the second reference image comprises, in case that the brightness of the first reference image is different form the brightness of the prestored eye area image, matching the brightness of the eye area image to the brightness of the first reference image.
